# EUROPÄISCHE PATENTSCHRIFT

(11) **EP 1 358 476 B1**
(45) Veröffentlichungstag und Bekanntmachung des Hinweises auf die Patenterteilung: **06.12.2006**
(21) Anmeldenummer: 02706662.0
(22) Anmeldetag: 04.02.2002
(51) Int. Cl.: G01N 29/22

(54) **ULTRASCHALL-SENSOR FÜR DIE PROZESSSTEUERUNG BEIM WIDERSTANDSPUNKTSCHWEISSEN**
ULTRASONIC SENSOR FOR CONTROLLING THE PROCESS DURING RESISTANCE SPOT WELDING
CAPTEUR ULTRASONIQUE POUR LA COMMANDE DE PROCESSUS POUR LE SOUDAGE PAR RESISTANCE PAR POINTS

(30) Priorität: 02.02.2001 DE 10104608
(43) Veröffentlichungstag der Anmeldung: 05.11.2003
(73) Patentinhaber: ROBERT BOSCH GMBH, 70442 Stuttgart (DE); Prüf- und Messgerätebau Gmbh & Co. KG, D-42115 Wuppertal (DE)
(72) Erfinder: ARNDT, Volker, 64711 ERBACH (DE); LACH, Michael, D-40699 Erkrath (DE); PLATTE, Michael, 42113 Wuppertal (DE); MUELLER, Heinz-Ullrich, 64720 Michelstadt (DE)
(74) Vertreter: Thürer, Andreas
(86) Internationale Anmeldenummer: PCT/DE2002/000392
(87) Internationale Veröffentlichungsnummer: WO 2002/061413

(56) Entgegenhaltungen:
- EP-A- 0 653 061
- WO-A-99/51384
- DE-A- 19 937 479
- US-A- 4 918 990
- WASCHKIES E: "PRUEFEN DES WIDERSTANDS - PUNKTSCHWEISSPROZESSES MIT ULTRASCHALL" SCHWEISSEN UND SCHNEIDEN, DEUTSCHER VERLAG FUR SCHWEISSTECHNIK. DUSSELDORF, DE, Bd. 49, Nr. 1, 1997, Seiten 15-19, XP000678139 ISSN: 0036-7184

## Beschreibung

### Stand der Technik

Die Erfindung bezieht sich auf einen Ultraschall-Sensor zur Durchführung einer Prozesssteuerung beim Widerstandspunktschweißen nach der Gattung des unabhängigen Anspruchs.

Das in der EP-A-653 061 beschriebene Verfahren besteht im wesentlichen darin, den vorgesehenen Schweißbereich während des Schweißvorgangs mit Scher- bzw. Transversalwellen zu durchschallen, indem an den äußeren Elektrodenschäften der beiden gegenüberliegenden Schweißelektroden je ein Ultraschallsender und ein Ultraschallempfänger für Scherwellen angeordnet wird. Ausgehend vom Ultraschallsender an der einen Schweißelektrode durchläuft das Ultraschallsignal das Schweißgut - zwei oder mehrere zu verschweißende Bleche - sowie die andere Schweißelektrode bis hin zum Ultraschallempfänger, von dem es in ein messbares elektrisches Signal U umgewandelt wird, dessen zeitlicher Verlauf durch U = Uₒ•sindωt dargestellt werden kann, wobei ω=2πf die Kreisfrequenz der Ultraschallwelle, f die Frequenz und t die Zeit ist. Das Durchschallungssignal wird online erfaßt und dessen Amplitude Uₒ als Steuergröße für die Amplitude und Zeitverlauf des Schweißstromes verwendet. Die Transversalwelle wird deshalb gewählt, weil der Einfluss der Flüssigkeitsbildung in der Schweißlinse auf die Dämpfung einer durchgelassenen Welle bei dieser Wellenart sehr groß ist. Die sich im Verlauf des Schweißprozesses deutlich und in charakteristischer Weise ändernde Amplitude Uₒ der Transversalwelle lässt einen verlässlichen Rückschluss auf die Ausbildung und Größe der Schweißlinse zu und kann somit als Stellgröße für einen Regelprozess verwendet werden.

Die grundsätzliche Durchführbarkeit des Verfahrens und die Verlässlichkeit der Prüfaussage hängt entscheidend von den verwendeten Ultraschall-Sensoren, ihrer Anordnung bezüglich der Schweißelektrode und der Schallausbreitung innerhalb der Schweißelektroden ab. Bei der Realisierung gemäß EP-A-653 061 ist eine Ultraschallsensoranordnung gewählt, bei welcher der Ultraschallsender und Ultraschallempfänger an den äußeren Elektrodenschäften oder an den hier nicht eingezeichneten Elektrodenhaltern befestigt sind. Es werden Scher- bzw. Transversalwellen oder Torsionswellenwellen mit einer Frequenz kleiner 1 MHz erzeugt. Als besonders vorteilhaft wird angegeben, horizontal polarisierte Transversalwellen zu erzeugen, da diese eine geringe Neigung zu unerwünschten Modenumwandlungen bei Reflexionen innerhalb des schallführenden Elektrodenhalters haben. Bei den Ultraschallsendern und -empfängern handelt es sich um sogenannte Scherwellen-Prüfköpfe. Sie enthalten ebene und zumeist runde Piezoplatten von einigen mm bis einigen cm Durchmesser, die bei Anregung mit einer elektrischen Spannung eine Scherbewegung ausführen oder umgekehrt im Empfangsfall auf eine empfangene Scherwelle mit einer Empfangsspannung reagieren. Da bei direktem Anbringen eines solchen Scherwellen-Prüfkopfes am äußeren Elektrodenschaft die Hauptabstrahlrichtung des Schalls nicht in Richtung des Schweißgutes, sondern auf den Mittelpunkt der Elektrode gerichtet wäre, verwendet man bevorzugt Vorsatzkeile, die zwischen den Prüfköpfen und den Schweißelektroden angebracht werden und eine Ausrichtung der Hauptabstrahlrichtung des Prüfkopfes zum Schweißgut unter einem Winkel bewirken, der deutlich unter 90° liegt, z.B. ca. 45°. Eine vollständige Bündelung der erzeugten Schallenergie in Richtung des Schweißpunktes ist so jedoch nicht möglich.

In der nachveröffentlichten DE-A 199 37 479 ist eine diesbezüglich verbesserte Ultraschall-Sensoranordnung beschrieben, bei der im Sende- und/oder Empfangsfall eine piezoelektrische Scherwellen-Platte bzw. ein kompletter Scherwellen-Prüfkopf in eine Aussparung innerhalb des Elektrodenschaftes angebracht ist, und zwar in einer solchen Weise, dass die piezoelektrische Platte annähernd senkrecht zum Elektrodenschaft ausgerichtet ist und somit die Hauptabstrahlrichtung des Senders und die Hauptempfangsrichtung des Empfängers parallel zum Elektrodenschaft liegen und aufeinander gerichtet sind. Auf diese Weise wird die gesamte erzeugte Ultraschallenergie in Richtung des Schweißpunktes gebündelt und von dort in Richtung Empfänger durchgelassen. Daher lässt sich im Schweißpunkt eine solche Ultraschallintensität und im Empfangsfall ein so großes Empfangssignal erzeugen, dass hinsichtlich der weiteren Auswertung zur Prozesssteuerung des Schweißvorganges immer ein sehr viel größeres Nutz-Störverhältnis vorliegt.

Bei der zuletzt genannten, hinsichtlich des Nutz-Störverhältnisses der Ultraschallsignale optimierten Sensoranordnung aus DE-A-199 37 479, bei der die Sensoren in speziell ausgebildete Schweißelektroden integriert sind, wird mitunter als nachteilig angesehen, dass die beim Punktschweißen üblichen Elektrodenschäfte nicht mehr verwendet werden können. Diese waren aufgrund ihrer glatten zylindrischen Form als einfaches Drehteil mit sehr geringen Kosten herstellbar. Bei der Sensoranordnung gemäß DE-A-199 37 479 muss dagegen sowohl bei einer mechanischen Beschädigung des Elektrodenschaftes als auch im Falle eines Sensordefektes die komplette Schweißelektrode mit integriertem Sensor ausgewechselt werden.

Beim Widerstandspunktschweißen wird jedoch entsprechend der Vielfalt unterschiedlich geformter Schweißobjekte auch eine Vielzahl von unterschiedlich geformten Schweißelektroden eingesetzt. Da der Durchmesser der Schweißelektroden für die meisten Anwendungen gleich ist, besteht die Artenvielfalt im wesentlichen in Schweißelektroden unterschiedlicher Länge und unterschiedlich geformter Endstücke, welche von entsprechenden Elektrodenhalterungen aufgenommen werden müssen. Für letztgenannte existiert auch wiederum eine große Typenvielfalt. Daher muss auch bei der akustisch optimierten Sensoranordnung gemäß DE-A-199 37 479 eine große Artenvielfalt von Schweißelektroden mit integrierten Sensoren in Kauf genommen werden.

In EP-A-653 061 wird bezüglich der am äußeren Elektrodenschaft angebrachten Sensoren keine Angabe darüber gemacht, wie die Scherwellen-Prüfköpfe mitsamt den Vorsatzkeilen am äußeren Elektrodenschaft befestigt werden. Dies stellt nämlich ein grundlegendes Problem dar. Zum einen muss die Verbindung akustisch gut leitend sein, andererseits aber auch mechanisch so fest, dass die Sensoren und/oder Vorsatzkeile den beim Schweißprozess durch Öffnen und Schließen der Schweißzangen auftretenden hohen Beschleunigungen gewachsen sind und nicht beim Aufschlagen der Schweißelektroden auf die zu verschweißenden Bleche von den Schweißelektroden abfallen. Da außerdem noch beträchtliche Temperaturschwankungen an den Schweißelektroden auftreten können, ist eine Klebeverbindung ungeeignet. Ein leichtes Auswechseln der Sensoren wäre damit auch nicht möglich.

Aufgabe der vorliegenden Erfindung ist daher, einen Ultraschallsensor für die Prozesssteuerung beim Widerstandspunktschweißen anzugeben, bei dem die Sensoren bzw. Prüfköpfe vollständig in Richtung des Schweißpunktes ausgerichtet sind und am äußeren Schaft von vorzugsweise zylindrisch geformten Schweißelektroden dergestalt befestigt werden, dass eine einfache Montage und ein einfaches Auswechseln möglich sind.

### Vorteile der Erfindung

Der erfindungsgemäße Sensorträger weist zumindest ein Schwingerelement auf, das Ultraschallwellen in einen zu untersuchenden Bereich einleitet und/oder die aus dem zu untersuchenden Bereich kommenden Ultraschallwellen empfängt, wobei das Schwingerelement in einem Schwingerträger angeordnet ist und der Schwingerträger Verbindungsmittel umfasst zur Verbindung mit einer Elektrode oder Elektrodenschaft einer Schweißanlage. Die Verbindungsmittel stellen in einfacher Weise sicher, dass bei einem Verschleiß der Schweißelektrode nicht die komplette Sensoranordnung mit ausgewechselt werden muss. So sind die Verbindungsmittel vorzugsweise lösbar ausgeführt, um bei einem Austausch der Schweißelektroden zuerst den Schwingerträger von der Elektrode bzw. von dem Elektrodenschaft zu lösen und ihn anschließend an der neuen Elektrode wieder anzubringen. Der erfindungsgemäße Sensorträger ermöglicht weiterhin, für die Widerstandsschweißanlage herkömmliche, bereits im Handel erhältliche Elektroden einzusetzen, die mit dem Sensorträger nachgerüstet werden.

In einer zweckmäßigen Weiterbildung ist der Sensorträger formschlüssig mit der Elektrode verbindbar. Dadurch breiten sich die vorzugsweise als Scherwellen ausgeführten Ultraschallwellen von dem Schwingerträger über die Elektrode zu dem zu durchschallenden Bereich leicht aus. In einer zweckmäßigen Ausgestaltung ist weiterhin vorgesehen, den Schwingerträger ringförmig auszuführen, dessen Innendurchmesser passgenau dem Außendurchmesser der Schweißelektrode entspricht. Außerdem ist der Schwingerträger geschlitzt ausgeführt, wobei die Verbindungsmittel als Klemmvorrichtung ausgeführt sind, die im gespannten Zustand zwischen der Außenoberfläche der Schweißelektrode und der Innenoberfläche des Schwingerträgers eine materialschlüssige Verbindung zur Übertragung von Ultraschallwellen bewerkstelligen. Das Schwingerelement ist so angeordnet, dass dessen Flächennormale in etwa parallel zur Mittelachse des ringförmigen Schwingerträgers ausgerichtet ist oder mit diesem einen Winkel von nicht mehr als 15 Grad bildet. Damit ist gewährleistet, dass die Ultraschallwellen sicher den zu untersuchenden Bereich erreichen. Die vorgeschlagene Anordnung zeichnet sich durch einfache Handhabbarkeit mit Blick auf das Auswechseln des Sensorträgers aus, und gewährt andererseits, dass die Ultraschallwellen sicher auf die Elektrode und den zu untersuchenden Bereich übergehen. Mit der einen Spalt aufweisenden Klemmvorrichtung ist außerdem gewährleistet, dass der Sensorträger auch an Elektroden gering abweichender Durchmesser anzubringen ist, ohne für unterschiedliche Elektroden jeweils unterschiedliche Sensorträger vorsehen zu müssen.

In einer zweckmäßigen Weiterbildung ist vorgesehen, dass das Material des Schwingerträgers eine ähnliche akustische Impedanz aufweist wie das Material der Schweißelektrode. Dadurch kann die Ultraschallübertragung vom Schwingerträger auf die Schweißelektrode weiter verbessert werden.

Weitere zweckmäßige Weiterbildungen ergeben sich aus weiteren abhängigen Ansprüchen und aus der Beschreibung.

### Zeichnung

Ein Ausführungsbeispiel ist in der Zeichnung dargestellt und wird nachfolgend näher beschrieben.

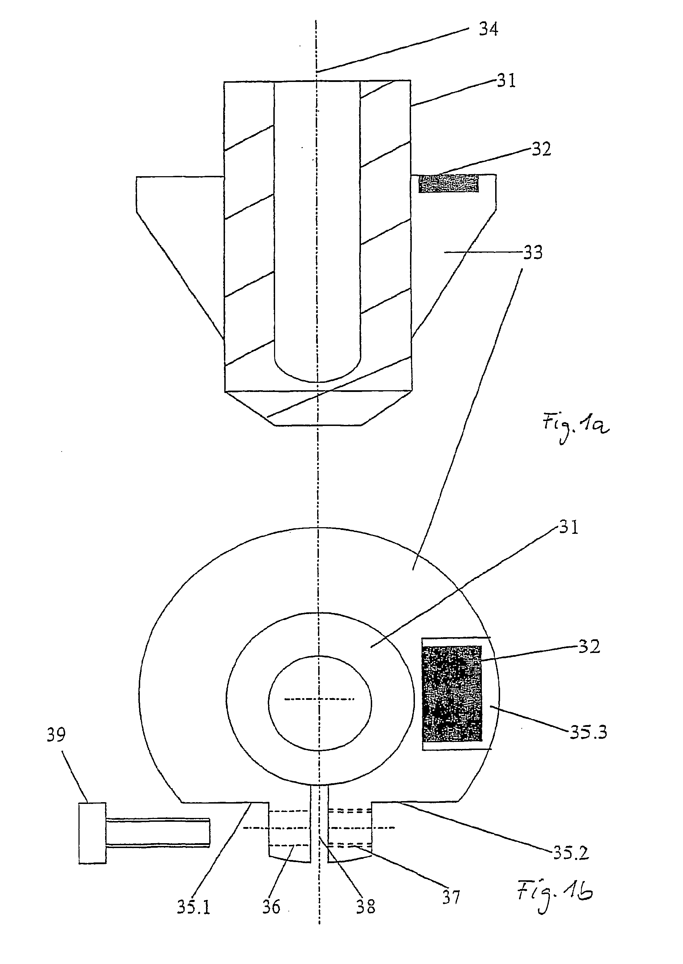

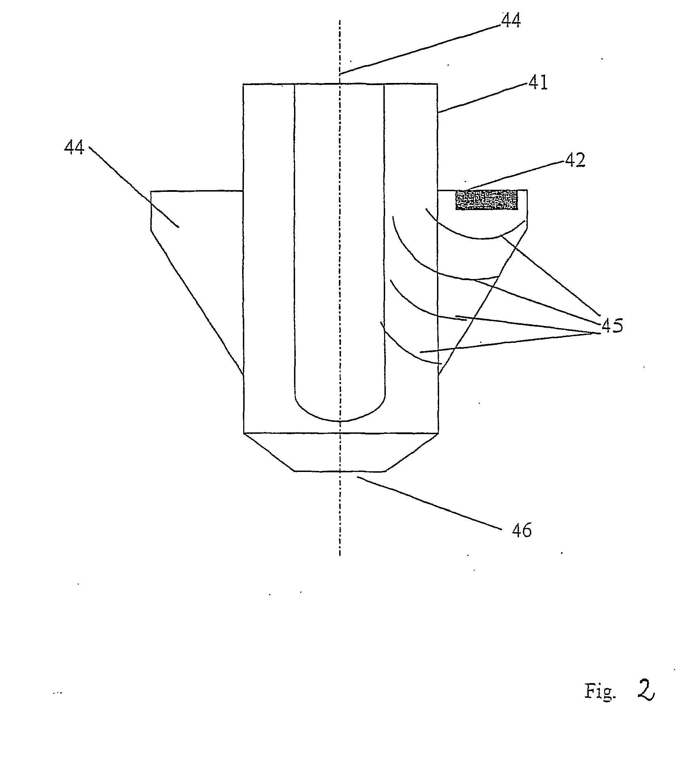

Fig. 1 zeigt am Beispiel einer einfachen Ausführungsform eines Sensors für die Prozesssteuerung beim Widerstandspunktschweißen den grundsätzlichen Aufbau und die Wirkungsweise der Erfindung. Figur 1a ist ein Schnitt durch die Schweißelektrode mit dem daran angebrachten Sensor, Figur 1b ist eine Draufsicht auf die Sensoranordnung gemäß Figur 1a. Figur 2 ergänzt die Figur 1a um die skizzierten Wellenfronten der Schallabstrahlung.

Die Erfindung nutzt insbesondere den physikalischen Effekt aus, dass eine niederfrequente (< 1 MHz) Scherwelle, wie sie zur Prozesssteuerung beim Widerstandspunktschweißen gemäß EP-A-653 061 vorgeschlagen wird, oder auch allgemein jede andere Wellenform einer entsprechend niederfrequenten Ultraschallwelle, die in eine zylindrische und zur Aufnahme des Kühlwassers innen hohle Schweißelektrode eingeleitet wird, sich auf dem Weg zum Empfänger an der anderen Schweißelektrode mehr oder minder homogen über den gesamten Querschnitt der Schweißelektrode ausbreitet. Dies liegt daran, dass unterhalb einer Frequenz von 1 MHz bei typischen Ausbreitungsgeschwindigkeiten von 3000 m/s die Wellenlänge der Scherwelle im zylindrischen Schaft der Schweißelektrode einige Millimeter bis einige Zentimeter beträgt. Schweißelektroden haben typischerweise 15 - 30 mm Außendurchmesser und 4 - 8 mm Wandstärke. Der Querschnitt des Elektrodenschaftes liegt daher in gleicher oder kleinerer Größenordnung wie die Wellenlänge. Der Querschnitt der Schweißelektrode selbst stellt daher für die sich ausbreitende Ultraschallwelle bereits eine so kleine Aperturöffnung dar, dass eine weitgehend ungerichtete Schallausbreitung erfolgt und die Schallwelle bereits nach kurzem Laufweg den gesamten Querschnitt des Elektrodenschaftes ausfüllt.

Um den zylindrischen Schaft der Schweißelektrode 31 herum angeordnet befindet sich ein ringförmiger Schwingerträger 33. Der Innendurchmesser des ringförmigen Schwingerträgers 33 ist so gewählt, dass er gegenüber dem Außendurchmesser der Schweißelektrode 31 nur ein geringfügiges Übermaß besitzt, so dass der Schwingerträger 33 passgenau auf den Schaft der Schweißelektrode 31 aufgeschoben und ebenso leicht wieder entfernt werden kann. Der Schwingerträger 33 ist an einer Seite geschlitzt. An der geschlitzten Stelle befindet sich ein dünner Spalt 38. Links und rechts des Spaltes 38 sind an dem Schwingerträger 33 Materialaussparungen 35.1 und 35.2 angebracht sowie eine Durchgangsbohrung 36 und eine Gewindebohrung 37, so dass die beiden Schenkel des Schwingerträgers 33 durch Eindrehen der Schraube 39 in die Gewindebohrung 37 unter Verkleinerung der Breite des Spaltes 38 zusammengezogen werden. Wird der Schwingerträger 33 auf die Schweißelektrode 31 aufgeschoben, so wird durch Anziehen der in dem Gewinde 37 befindlichen Schraube 39 der Schwingerträger 33 bündig an der Schweißelektrode 31 festgeklemmt. Innenoberfläche des Schwingerträgers 33 und die Außenoberfläche der Schweißelektrode 31 bilden dabei je nach Anzugskraft der Schraube 39 einen mehr oder minder materialschlüssigen Kontakt miteinander, über den eine niederfrequente Ultraschallwelle auch ohne Zufügen von Koppelmittel gut übertragen werden kann.

Im Schwingerträger 33 befindet sich eine weitere Materialaussparung 35.3, in die ein piezoelektrisches Schwingerelement 32 oder ein kompletter Ultraschallprüfkopf eingelassen ist. In Fig. 1 werden rechteckförmige piezoelektrische Schwingerelemente verwendet. Grundsätzlich können diese jedoch auch jede andere geometrische Form (z.B. rund, halbrund oder rautenförmig) haben.

Die Anordnung des Schwingerelements 32 in dem Schwingerträger 33 ist so, dass die Flächennormale des Schwingerträgers 33, die mit der Hauptabstrahlrichtung identisch ist, parallel zur Mittelachse 34 verläuft, so dass im Sendefall die Schallabstrahlung in Richtung des Schweißpunktes erfolgt. Bei niedrigen Frequenzen (< 1 MHz) und nicht zu großen Schwingerabmessungen (z.B. < 20 mm) liegt die Wellenlänge des erzeugten Ultraschalls in der Größenordnung der Kantenlänge des Schwingerelements 32 oder ist sogar größer als diese. Daher erfolgt die Schallabstrahlung nahezu ungerichtet und kugelförmig, wie die skizzierten Wellenfronten 45 in Fig. 2 verdeutlichen sollen. Daher geht die vom piezoelektrischen Schwingerelement 32 erzeugte Ultraschallwelle bereits nach kurzer Laufstrecke vom Schwingerträger 33 vollständig in den Elektrodenschaft 31 über.

Im Empfangsfall gelten für eine vom Boden 46 ausgehende niederfrequente Ultraschallwelle bezüglich der räumlichen Schallausbreitung in der Schweißelektrode 31 und dem Schwingerträger 33 sinngemäß dieselben Überlegungen. Daher kann die beschriebene Sensoranordnung sowohl als Sender als auch als Empfänger verwendet werden: Wegen der großen Wellenlänge der Schallwelle und der geringen Abmessungen des Schweißpunktes bzw. des Bodens 46 der Schweißelektrode 31 bildet sowohl dieser als auch jeder andere Querschnitt der Schweißelektrode 31 eine kleine Aperturöffnung, so dass ohne seitliche Materialbegrenzungen eine nahezu kugelförmige Schallausbreitung erfolgen würde. Daher trifft im Empfangsfall auch ein großer Teil der Schallenergie auf das Schwingerelement 32. Da außerdem dessen Fläche nahezu parallel zur Wellenfront ausgerichtet ist, kann zwischen Ober- und Unterseite des Piezoelements eine sehr hohe Empfangsspannung abgegriffen werden.

Um die Ausrichtung des Schwingerelements 32 zur Wellenfront zu optimieren, kann dieses leicht geneigt werden, so dass die Flächennormale des Schwingerelements 32 und die Achse 41 einen Winkel von wenigen Winkelgraden bilden. Um die Schwingungsform zu optimieren, können die piezoelektrischen Schwingerelemente 32 auf der Rückseite mit einem Dämpfungskörper versehen sein.
Außerdem können zwischen Schwingerträger und den piezoelektrischen Schwingerelementen akustische Anpassschichten angebracht sein.

Um beim Schallübergang zwischen Schwingerträger 33 und Schweißelektrode 31 Schallreflexionen zu vermeiden, kann ein Material gewählt werden, dessen akustische Impedanz (Produkt aus Dichte und Schallgeschwindigkeit) dem Material entspricht, aus dem die Schweißelektroden 31 hergestellt sind.

Brechungseffekte werden vermieden, indem für den Schwingerträger 33 ein Material gewählt wird, dessen Schallgeschwindigkeit dem Material entspricht, aus dem die Schweißelektroden 31 hergestellt werden.

Es können Piezowandler auch in Stapeltechnik ausgelegt und hergestellt werden. Diese Technik kann bezüglich der vorliegenden Erfindung vorteilhaft eingesetzt werden. Bei elektrischer Parallelschaltung von n Elementen lassen sich z.B. im Sendefall bei gleicher Anregungsspannung n-fach höhere Schallamplituden erzeugen, im Empfangsfall n-fach höhere Ladungsmengen.

## Patentansprüche

1. Sensorträger mit zumindest einem Schwingerelement (32), das Ultraschallwellen in einen zu untersuchenden Bereich einleitet und/oder die aus dem zu untersuchenden Bereich kommenden Ultraschallwellen empfängt, wobei das Schwingerelement (32) an oder in einem Schwingerträger (33) außerhalb einer Schweißelektrode (31) angeordnet ist, **dadurch gekennzeichnet, dass** der Schwingerträger (33) Verbindungsmittel (36, 37, 38, 39) umfasst zur Verbindung mit einer Schweißelektrode (31), und wobei der Schwingerträger (33) ringförmig ausgebildet ist in der Weise, dass dessen Innendurchmesser in etwa dem Außendurchmesser der Schweißelektrode (31) entspricht, so dass der Schwingerträger (33) passgenau am Schaft der Schweißelektrode (31) anordenbar ist.

2. Vorrichtung nach Anspruch 1, **dadurch gekennzeichnet, dass** das Verbindungsmittel (36, 37, 38, 39) eine lösbare Verbindung zwischen Schwingerträger (33) und Schweißelektrode (31) herstellt.

3. Vorrichtung nach einem der vorhergehenden Ansprüche, **dadurch gekennzeichnet, dass** der Schwingerträger (33) formschlüssig mit der Elektrode (31) ausgeführt ist.

4. Vorrichtung nach einem der vorhergehenden Ansprüche, **dadurch gekennzeichnet, dass** das Verbindungsmittel (36, 37, 38, 39) als Klemmvorrichtung ausgeführt ist.

5. Vorrichtung nach einem der vorhergehenden Ansprüche, **dadurch gekennzeichnet, dass** der Schwingerträger (33) in Längsrichtung einen Schlitz (38) aufweist, der durch das Verbindungsmittel (36, 37, 38, 39) veränderbar ist zum Herstellen einer formschlüssigen Verbindung mit der Elektrode (31).

6. Vorrichtung nach einem der vorhergehenden Ansprüche, **dadurch gekennzeichnet, dass** das Schwingerelement. (32) so angeordnet ist, dass dessen Flächennormale in etwa parallel zur Mittelachse des Schwingerträgers (33) ausgerichtet ist oder mit diesem einen Winkel von nicht mehr als 15 Grad bildet.

7. Vorrichtung nach einem der vorhergehenden Ansprüche, **dadurch gekennzeichnet, dass** die verwendeten schwingerelemente (32) als Scherwellenplatten ausgelegt sind.

8. Vorrichtung nach einem der vorhergehenden Ansprüche, **dadurch gekennzeichnet, dass** das Schwingerelement (32) auf der Rückseite einen Dämpfungskörper aufweist.

9. Vorrichtung nach einem der vorhergehenden Ansprüche, **dadurch gekennzeichnet, dass** zwischen den Schwingerelementen (32) und dem Schwingerträger (33) akustische Anpassschichten angeordnet sind.

10. Vorrichtung nach einem der vorhergehenden Ansprüche, **dadurch gekennzeichnet, dass** das Material des Schwingerträgers (33) eine ähnliche akustische Impedanz aufweist wie das Material der Schweißelektrode (31).

11. Vorrichtung nach einem der vorhergehenden Ansprüche, **dadurch gekennzeichnet, dass** das Material des Schwingerträgers (33) eine ähnliche Schallgeschwindigkeit aufweist wie das Material der Schweißelektrode (31).

12. Vorrichtung nach einem der vorhergehenden Ansprüche, **dadurch gekennzeichnet, dass** die Frequenz des Schwingerelements (32) kleiner als 1 MHz ist.

13. Vorrichtung nach einem der vorhergehenden Ansprüche, **dadurch gekennzeichnet, dass** das Schwingerelement (32) in Stapeltechnik aufgebaut ist und aus mindestens zwei fluchtend übereinandergestapelter piezoelektrischen Platten oder Scheiben besteht.

## Claims

1. Sensor mount having at least one oscillator element (32), which introduces ultrasound waves into an area to be investigated and/or receives ultrasound waves coming from the area to be investigated, with the oscillator element (32) being arranged on or in an oscillator mount (33) outside a welding electrode (31), **characterized in that** the oscillator mount (33) has connection means (36, 37, 38, 39) for connection to a welding electrode (31), and in which the oscillator mount (33) is designed to be annular in such a manner that its internal diameter corresponds approximately to the external diameter of the welding electrode (31), so that the oscillator mount (33) can be arranged with an accurate fit on the shaft of the welding electrode (31).

2. Apparatus according to Claim 1, **characterized in that** the connection means (36, 37, 38, 39) produces a detachable connection between the oscillator mount (33) and the welding electrode (31).

3. Apparatus according to one of the preceding claims, **characterized in that** the oscillator mount (33) is designed with an interlocking connection to the electrode (31).

4. Apparatus according to one of the preceding claims, **characterized in that** the connection means (36, 37, 38, 39) are designed in the form of a clamping apparatus.

5. Apparatus according to one of the preceding claims, **characterized in that** the oscillator mount (33) has a slot (38) in the longitudinal direction, and can be varied by means of the connection means (36, 37, 38, 39) in order to produce an interlocking connection with the electrode (31).

6. Apparatus according to one of the preceding claims, **characterized in that** the oscillator element (32) is arranged such that the normal to its surface is aligned approximately parallel to the centre axis of the oscillator mount (33), or forms an angle of not more than 15 degrees with it.

7. Apparatus according to one of the preceding claims, **characterized in that** the oscillator elements (32) which are used are in the form of shear-wave plates.

8. Apparatus according to one of the preceding claims, **characterized in that** the oscillator element (32) has a damping body on the rear face.

9. Apparatus according to one of the preceding claims, **characterized in that** acoustic matching layers are arranged between the oscillator elements (32) and the oscillator mount (33).

10. Apparatus according to one of the preceding claims, **characterized in that** the material of the oscillator mount (33) has a similar acoustic impedance to the material of the welding electrode (31).

11. Apparatus according to one of the preceding claims, **characterized in that** the material of the oscillator mount (33) has a similar speed of sound to that of the material of the welding electrode (31).

12. Apparatus according to one of the preceding claims, **characterized in that** the frequency of the oscillator element (32) is lower than 1 MHz.

13. Apparatus according to one of the preceding claims, **characterized in that** the oscillator element (32) is formed using a stacking technique and comprises at least two piezoelectric plates or discs which are stacked one on top of the other, aligned.

## Revendications

1. Support de capteur comportant au moins un oscillateur (32), qui introduit des ondes à ultrasons dans une zone à étudier et/ou qui reçoit les ondes à ultrasons provenant de la zone à étudier, l'oscillateur (32) étant disposé sur ou dans un porte-oscillateur (33) à l'extérieur d'une électrode de soudage (31),
**caractérisé en ce que**
le porte-oscillateur (33) comporte des moyens de liaison (36, 37, 38, 39) pour la liaison avec une électrode de soudage (31), le porte-oscillateur (33) étant de forme annulaire de telle façon que son diamètre intérieur corresponde approximativement au diamètre extérieur de l'électrode de soudage (31) afin que le porte-oscillateur (33) puisse être disposé en ajustement serré sur la tige de l'électrode de soudage (31).

2. Dispositif selon la revendication 1,
**caractérisé en ce que**
le moyen de liaison (36, 37, 38, 39) établit une liaison amovible entre le porte-oscillateur (33) et l'électrode de soudage (31).

3. Dispositif selon l'une quelconque des revendications précédentes,
**caractérisé en ce que**
le porte-oscillateur (33) est en liaison de forme avec l'électrode (31).

4. Dispositif selon l'une quelconque des revendications précédentes,
**caractérisé en ce que**
le moyen de liaison (36, 37, 38, 39) est en forme de dispositif de serrage.

5. Dispositif selon l'une quelconque des revendications précédentes,
**caractérisé en ce que**
le porte-oscillateur (33) présente, dans le sens longitudinal, une fente (38) qui peut être modifiée par le moyen de liaison (36, 37, 38, 39) pour établir une liaison de forme avec l'électrode (31).

6. Dispositif selon l'une quelconque des revendications précédentes,
**caractérisé en ce que**
l'oscillateur (32) est disposé avec sa normale de surface approximativement parallèle à l'axe central du porte-oscillateur (33) ou formant avec celui-ci un angle qui ne dépasse pas 15 degrés.

7. Dispositif selon l'une quelconque des revendications précédentes,
**caractérisé en ce que**
les oscillateurs utilisés (32) sont des plateaux à ondes de cisaillement.

8. Dispositif selon l'une quelconque des revendications précédentes,
**caractérisé en ce que**
l'oscillateur (32) présente un amortisseur sur le côté arrière.

9. Dispositif selon l'une quelconque des revendications précédentes,
**caractérisé en ce que**
des couches d'adaptation acoustiques sont disposées entre les oscillateurs (32) et le porte-oscillateur (33).

10. Dispositif selon l'une quelconque des revendications précédentes,
**caractérisé en ce que**
le matériau du porte-oscillateur (33) présente une impédance acoustique similaire à celles du matériau de l'électrode de soudage (31).

11. Dispositif selon l'une quelconque des revendications précédentes,
**caractérisé en ce que**
le matériau du porte-oscillateur (33) présente une vitesse du son similaire à celle du matériau de l'électrode de soudage (31).

12. Dispositif selon l'une quelconque des revendications précédentes,
**caractérisé en ce que**
la fréquence de l'oscillateur (32) est inférieure à 1 MHz.

13. Dispositif selon l'une quelconque des revendications précédentes,
**caractérisé en ce que**
l'oscillateur (32) est fabriqué par empilement et constitué d'au moins deux plaques ou disques piézoélectriques empilés(e) de manière alignée l'un au-dessus de l'autre.
